# FASCICULE DE BREVET EUROPEEN

(11) **EP 3 089 859 B1**
(45) Date de publication et mention de la délivrance du brevet: **31.07.2019**
(21) Numéro de dépôt: 14835484.8
(22) Date de dépôt: 23.12.2014
(51) Int. Cl.: B29C 65/60, B29C 65/18, B60K 15/03

(54) **PROCEDE POUR LA FIXATION D'UN ELEMENT SUR UN PION**
VERFAHREN ZUM BEFESTIGEN EINES ELEMENTS AN EINEM STIFT
METHOD FOR FASTENING AN ELEMENT TO A PIN

(30) Priorité: 31.12.2013 FR 1363748
(43) Date de publication de la demande: 09.11.2016
(73) Titulaire: Plastic Omnium Advanced Innovation and Research, 1120 Bruxelles (BE)
(72) Inventeur: RIVENET, Nicolas, F-60280 Venette (FR)
(74) Mandataire: Remy, Vincent Noel Paul
(86) Numéro de dépôt international: PCT/FR2014/053531
(87) Numéro de publication internationale: WO 2015/101746

(56) Documents cités:
- JP-A- S63 212 533
- US-A- 5 308 427

## Description

La présente invention concerne un procédé pour la fixation d'un élément sur une paroi d'un réservoir, cette paroi présentant au moins un pion en matière plastique.

Un réservoir de liquide dans un véhicule comprend une paroi qui délimite un espace contenant ce liquide (par exemple il s'agit d'un réservoir destiné à contenir une solution d'urée, qui va servir à dépolluer les gaz d'échappement par réduction catalytique sélective). Dans certains cas, on cherche à fixer une plaque rigide sur une face interne de cette paroi tout en maintenant une distance prédéterminée entre cette plaque et cette face interne. Ainsi cette plaque se situe à l'intérieur du réservoir et est entièrement baignée par le liquide. Par exemple cette plaque est une plaque chauffante, qui est alors apte à chauffer le liquide.

Pour fixer une telle plaque on utilise plusieurs pions en matière plastique qui s'étendent depuis la face interne de la paroi vers l'intérieur de la paroi, sensiblement perpendiculairement à celle-ci. La partie distale du pion désigne sa partie qui est la plus éloignée de cette face interne et qui se situe de l'autre côté de la plaque une fois cette plaque montée sur le pion (une façon de monter la plaque sur le pion est de passer la partie distale du pion par un trou de la plaque). La partie proximale du pion désigne l'autre partie du pion, qui est située entre la paroi et la plaque. Le pion est conformé de telle sorte qu'il maintient la plaque à une distance fixée de la paroi, par exemple la partie proximale du pion ne peut passer au travers du trou dans la plaque tandis que la partie distale peut passer au travers de ce trou.

Pour fixer la plaque sur le pion, et par conséquent la solidariser avec la paroi, on applique contre la partie distale du pion, avec une certaine pression, une bouterolle chauffée au-dessus de la température ambiante. Une bouterolle désigne un outil avec une face destinée à être chauffée et appliquée contre la pièce à déformer.

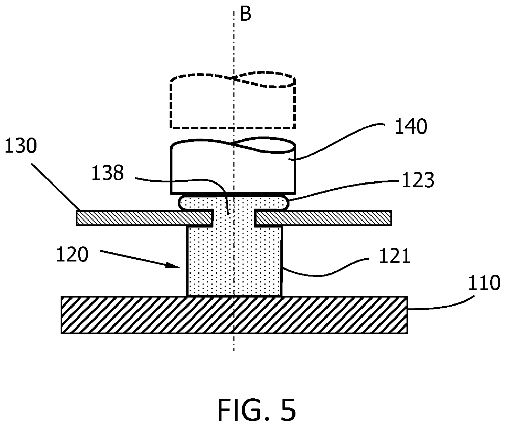

La figure 5 illustre ce procédé selon l'art antérieur de fixation d'une plaque 130 rigide sur une paroi 110 à l'aide d'un pion 120. La figure 5 est une vue en coupe d'une telle plaque 130 fixée sur le pion 120 à l'issue de ce procédé selon l'art antérieur. Par plaque rigide on entend une plaque qui ne se déforme sensiblement pas durant le processus d'écrasement du pion 120, c'est-à-dire pas de façon visible à l'oeil nu.

Le pion 120 s'étend selon une direction longitudinale B. La partie distale 123 du pion 120 est insérée dans un trou 138 de la plaque 130 de telle sorte que la partie distale 123 a traversé le trou 138 et dépasse du trou 138. La partie proximale 121 du pion se situe ainsi entre la plaque 130 et la paroi 110. La partie proximale 121 ne peut passer au travers du trou 138 car sa section transversale est supérieure à la section du trou 138. La plaque 130 est ainsi maintenue à l'interface entre la partie proximale 121 et la partie distale 123 du pion.

On appuie la face chauffée d'une bouterolle 140 contre la partie distale 123 en déplaçant cette bouterolle 140 selon l'axe longitudinal B vers la paroi 110. Sous l'effet de la pression et de la chaleur la partie distale 123 se déforme en étant prise en sandwich et écrasée entre la plaque 130 et la bouterolle 140, et s'étale sur la plaque 130 autour du trou 138. La partie distale 123 est ainsi prise en enclume entre la plaque 130 et la bouterolle 140.

La partie proximale 121 ayant été peu chauffée comparativement à la partie distale 123 et ayant été en partie protégée de l'action de la bouterolle 140 par la plaque 130, la partie proximale 121 n'est sensiblement pas déformée. Puis on écarte la bouterolle 140 de façon à limiter l'étalement de la partie distale 123 et à laisser cette partie distale 123 se refroidir. Les traits en pointillés représentent la bouterolle 140 dans cette position écartée.

Après son refroidissement, le pion 120 présente la forme d'un champignon dont la tête est la partie distale 123 déformée et le pied est la partie proximale 121. La paroi 130 est alors maintenue à l'interface de la partie proximale 121 et de la partie distale 123. En effet, la partie distale 123 s'étalant latéralement au-delà du trou 138 de la plaque 130, cette partie distale ne peut plus coulisser hors du trou 138.

Le cas échéant, le procédé ci-dessus est répété pour chacun des pions sur lesquels la plaque est montée. Dans ce cas, les pions sont écrasés successivement. Alternativement tous les pions sont simultanément déformés et écrasés par des bouterolles chauffantes contre la plaque.

US 5 308 427 A et JP S63 212533 A décrivent un procédé pour la fixation d'un élément sur une paroi d'un réservoir, ladite paroi présentant au moins un pion en matière plastique, ce procédé comprenant les étapes suivantes :
- on monte ledit élément sur ledit au moins un pion de telle sorte qu'une partie traversante dudit pion traverse ledit élément,
- on fond une portion de ladite partie traversante et on appuie sur ladite portion fondue de manière à former une tête de pion configurée pour maintenir ledit élément sur ledit pion.

Dans certains cas l'élément que l'on souhaite fixer sur les pions n'est pas une plaque rigide mais un élément plus flexible. Par exemple cet élément est une membrane, par exemple un tissu avec des fibres. Lorsqu'on utilise le procédé ci-dessus pour écraser la partie distale du pion, la flexibilité de l'élément interdit que la partie distale soit aplatie en étant écrasée entre cet élément et la bouterolle. En conséquence la partie distale, et également la partie proximale, se déforment de façon indésirable. Par exemple la partie proximale est écrasée et raccourcie, ou la partie proximale est penchée latéralement. Ainsi, un tel élément ne peut être maintenu correctement sur un pion à une distance prédéterminée de la paroi qui est la hauteur de la partie proximale.

Il est possible aussi que le pion et/ou l'élément soit conformé de telle sorte que durant le déplacement de la bouterolle, la partie distale ne soit pas écrasée entre cet élément et la bouterolle, même si l'élément est une plaque rigide. Ce serait le cas par exemple si le rapport hauteur sur diamètre du pion est suffisamment élevé pour qu'il se produise un flambement de la partie proximale, ou si le pion n'est pas aligné avec la direction de la force de compression appliquée par la bouterolle. Dans ce cas le pion serait endommagé et l'élément ne pourrait être maintenu correctement sur le pion.

La présente invention vise à remédier à ces inconvénients.

L'invention vise à proposer un procédé qui permette de fixer de façon stable un élément sur un pion, et par extension sur une pluralité de pions.

Ce but est atteint grâce au fait que le procédé comprend les étapes suivantes :
(a1) On monte l'élément sur le pion de telle sorte qu'une partie traversante du pion traverse cet élément,
(a2) On fond une portion de cette partie traversante et on appuie sur la portion fondue de telle sorte que la portion fondue s'enroule librement autour du pion de manière à former une tête de pion configurée pour maintenir l'élément sur le pion.

Grâce à ces dispositions, la combinaison du chauffage d'une portion de la partie distale et de la pression sur cette portion fondue permet de déformer cette portion par enroulement libre en une tête, sans contrainte par l'élément. Il n'y a donc sensiblement pas de contrainte exercée sur la partie proximale du pion située entre l'élément et la paroi (partie qui n'a pas traversé l'élément), et pas de déformation indésirable du pion et en particulier de sa partie proximale. On qualifie d'indésirable une déformation du pion qui le rend impropre à fixer l'élément de façon stable. Ainsi, selon l'invention, l'élément est fixé de façon stable sur le pion.

Par exemple, selon l'invention, la paroi présente une pluralité de pions, et immédiatement après l'étape (a1), on effectue une étape (b1) d'égalisation de surface sur un premier groupe des pions, puis dans une étape (b2) on effectue l'étape (a2) sur chacun des pions du premier groupe, cette étape d'égalisation de surface consistant à appliquer une pression déterminée pour compenser le fait que toutes les extrémités des parties traversantes des pions du premier groupe ne sont pas coplanaires.

Par exemple, selon l'invention, après l'étape (b2), on effectue une étape (b3) d'égalisation de surface sur un deuxième groupe des pions distinct du premier groupe, puis dans une étape (b4) on effectue l'étape (a2) sur chacun des pions du deuxième groupe, cette étape d'égalisation de surface consistant à appliquer une pression déterminée pour compenser le fait que toutes les extrémités des parties traversantes des pions du deuxième groupe ne sont pas coplanaires.

Par exemple, selon l'invention, après l'étape (b4), on effectue une étape (b5) dans laquelle on itère les étapes (b3) et (b4) avec un autre groupe des pions.

Par exemple, selon l'invention, après l'étape (b5), on effectue une étape (b6) dans laquelle on itère l'étape (b5) jusqu'à ce que l'élément soit fixé sur tous les pions.

Ainsi, dans le cas où toutes les extrémités des parties traversantes des pions de la paroi du réservoir ne contactent pas simultanément l'outil qui effectue l'étape d'égalisation, les pions qui contactent cet outil en premier (premier groupe) sont déformés sans être endommagés par cet outil, puis les pions restants sont déformés par groupes successifs.

On entend par endommagement une déformation du pion qui le rend impropre à fixer l'élément de façon stable sur ce pion (par exemple parce que la partie proximale du pion (définie ci-dessus) devient tordue, inclinée, ou déformée d'une autre façon indésirable.

A l'issue des répétitions, l'élément est donc fixé de façon stable sur chacun des pions.

L'invention concerne également un réservoir avec une paroi présentant au moins un pion en matière plastique dont une partie traversante traverse un élément.

Selon l'invention, une portion de cette partie traversante est déformée par enroulement libre autour du pion pour former une tête de pion configurée pour maintenir l'élément sur le pion.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- les figures 1A, 1B, et 1C illustrent différentes étapes successives du procédé de fixation d'un élément sur un pion selon l'invention,
- la figure 2 est une vue en coupe longitudinale d'un pion déformé après application du procédé selon l'invention,
- la figure 3 représente les différentes étapes de la fixation d'un élément sur plusieurs pions d'une paroi selon le procédé de l'invention,
- la figure 4 est une vue en perspective d'un élément fixé sur plusieurs pions d'une paroi selon le procédé de l'invention,
- la figure 5, déjà décrite, représente un pion déformé par un procédé selon l'art antérieur.

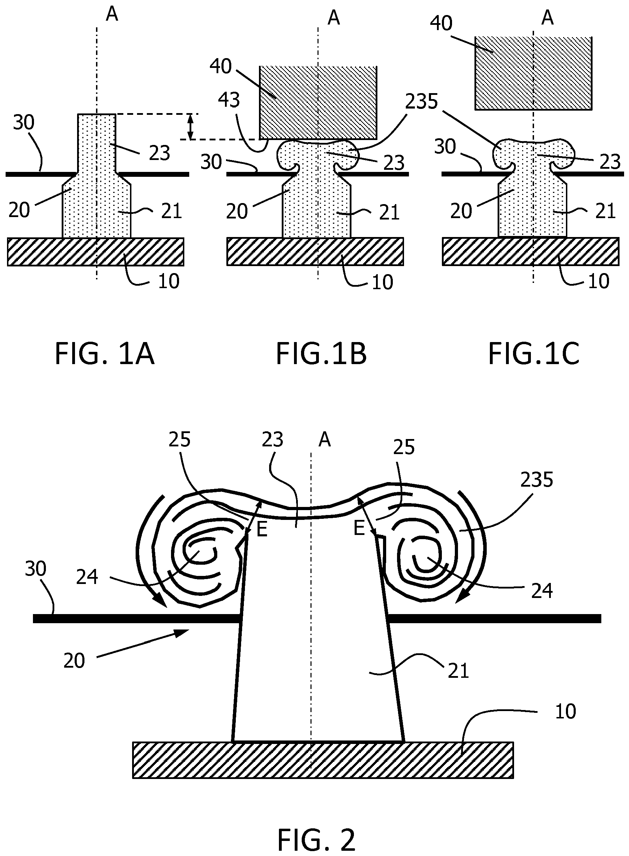

On considère une paroi 10 d'un réservoir. Un ou plusieurs pions 20 en matière plastique s'étendent selon un axe longitudinal A qui est sensiblement perpendiculaire à la surface de la paroi 10 au niveau de l'interface du pion 20 avec la paroi 10. La figure 1A est une vue en coupe longitudinale d'un tel pion 20.

Par exemple, ce ou ces pions 20 sont situés sur une paroi 10 intérieure du réservoir.

On décrit ci-dessous le procédé de fixation d'un élément 30 sur un pion 20. Ce procédé peut bien entendu être itéré à l'identique sur chacun des pions 20 de la paroi 10.

Un élément 30 est monté sur le pion 20 en enfilant le pion 20 par un orifice préexistant sur l'élément 30 et qui traverse cet élément 30. Si l'élément 30 est une pièce tissée, par exemple un tissu de fibres, cet orifice est une des mailles de cet élément. Si l'élément 30 est une pièce non-tissée, par exemple une feuille de plastique ou de métal, cet orifice est un trou percé ou moulé dans cet élément 30.

Alternativement, l'élément 30 est monté sur le pion 20 en perçant cet élément 30 par le pion 20.

Le pion 20 présente une partie traversante 23 qui est la partie du pion 20 qui est la plus éloignée de la paroi 10 (partie distale du pion 20), et qui a traversé l'élément 30 durant le montage de l'élément 30 sur le pion 20 (étape (a1) du procédé selon l'invention). La partie proximale 21 du pion 20 désigne l'autre partie du pion 20, qui est située entre la paroi 10 et l'élément 30. Le pion 20 est conformé de telle sorte qu'il maintient l'élément 30 à une distance fixée de la paroi 10, à savoir la hauteur (mesurée selon l'axe longitudinal A) de la partie proximale 21. Par exemple la partie proximale 21 du pion 20 ne peut passer au travers d'un orifice dans l'élément 30 tandis que la partie distale 23 peut passer au travers de cet orifice dans l'élément 30.

Par exemple le pion s'évase depuis sa partie distale 23 vers sa partie proximale 21 par une portion conique située à l'interface entre ces deux parties.

La bouterolle 40 présente une face (face de contact 43) qui est destinée à être chauffée et appliquée contre la partie distale 23 de façon à la déformer.

Cette face de contact 43 peut être plane ou convexe.

L'invention est décrite ci-dessous dans le cas où l'élément 30 est plus flexible que le pion 20.

Par exemple, l'élément 30 est une membrane, c'est-à-dire un élément dont une des dimensions spatiales (épaisseur) est très inférieure devant les deux autres, et dont la rigidité en compression est très inférieure à la rigidité en tension.

Par exemple, cet élément 30 est une membrane chauffante, et la paroi 10 fait partie d'un réservoir destiné à contenir un liquide, par exemple de l'urée.

Cependant l'invention s'applique également au cas où l'élément 30 n'est pas une membrane, par exemple est une plaque rigide dont la rigidité est au moins égale à celle du pion 20.

Selon l'invention, on fond une portion 235 de la partie traversante 23 et on appuie sur la portion fondue 235 de telle sorte que la portion fondue 235 s'enroule librement autour du pion 20 de manière à former une tête de pion configurée pour maintenir l'élément 30 sur le pion 20 (étape (a2)).

La portion 235 peut représenter une partie seulement, ou la totalité de la partie traversante 23.

Par « fondre », on entend que le matériau de la portion 235 est chauffé jusqu'à une température de chauffage T où il présente un état pâteux intermédiaire entre un état solide et un état liquide.

Avantageusement, ce chauffage de la portion 235 s'effectue en chauffant la face de contact 43 de la bouterolle 40 à la température de chauffage T et en la plaçant en contact avec l'extrémité de la partie traversante 23. Puis on appuie la bouterolle 40 contre l'extrémité de la partie traversante 23 du pion 20 de telle sorte que la face de contact 43 exerce, selon l'axe longitudinal A, une pression P sur cette partie traversante 23. Cette étape est illustrée en Figure 1B.

La température de chauffage T est proche de la température de fusion T_{F} du matériau constituant le pion 20. Par « proche » on signifie que la température de chauffage T se situe dans un intervalle de 50°C autour de la température de fusion T_{F}.

Ainsi, le matériau se déforme plus aisément et rapidement sous l'effet de la pression exercée sur le pion 20 par la bouterolle 40.

Par exemple, la température de chauffage T est supérieure à la température de fusion T_{F}.

Par exemple, on fond la portion 235 à température constante T_{c}, qui est la température de chauffage.

Par température constante, on entend une température qui varie peu autour de la valeur T_{c}, la température étant en pratique régulée par un dispositif de régulation. Ainsi, on fond la portion 235 à une température sensiblement constante qui oscille autour de la température moyenne T_{c}.

Par exemple, pour du polyéthylène haute densité, la température T_{c} est de l'ordre de 200°C, et les variations autour de cette température sont de l'ordre de ±15°C.

Ainsi, la portion 235 est portée rapidement à la température où elle prend un état pâteux et se déforme avant que le reste de la partie traversante 23 (située plus près de la partie proximale 21) ne soit chauffée. Ainsi la déformation de la partie proximale 21 est encore minimisée.

Alternativement, la température T varie pendant la période de contact entre le pion 20 et la bouterolle 40.

Par exemple la température T augmente avec la durée de contact entre le pion 20 et la bouterolle 40.

La pression de contact P entre la bouterolle 40 et le pion 20 varie sur la période de contact entre la bouterolle 40 et le pion 20, jusqu'à une valeur maximale P₀.

Avantageusement, on appuie sur la portion fondue 235 de façon progressive, avec une pression P ou une vitesse V déterminée.

Par exemple, la combinaison de la température de chauffage T de la bouterolle 40 et de la pression P exercée par la bouterolle 40 sur la portion 235 (ou, de façon équivalente, la combinaison de la température de chauffage T et de la vitesse d'avancement V de la bouterolle 40 selon l'axe longitudinal A contre cette portion 235) conduit à une déformation de la portion 235 telle que la partie proximale 21 n'est sensiblement pas déformée, et est essentiellement uniquement comprimée selon l'axe longitudinal A. Initialement (c'est-à-dire au premier contact de la bouterolle 40 avec la partie traversante 23), la température T de la bouterolle 40 est suffisamment élevée (et/ou la pression P exercée par la bouterolle 40 ou la vitesse d'avancement V de la bouterolle 40 est suffisamment faible) pour laisser le temps à la portion 235 de se déformer latéralement (radialement vers l'extérieur) tandis que la partie proximale 21 ne se déforme pas de façon indésirable.

En particulier, la pression P exercée par la bouterolle 40 sur la portion 235 ou la vitesse d'avancement V de la bouterolle 40 est choisie en fonction de la température T_{c} de telle sorte que la partie proximale 21 du pion 20 est peu ou pas déformée.

Ainsi, la partie proximale 21 ne flambe pas (le flambement désigne, de façon connue, le phénomène d'instabilité d'une structure soumise à un effort normal de compression qui se déforme de façon globale perpendiculairement à la direction de compression) ou ne se penche pas latéralement sensiblement sous l'action de la bouterolle 40.

Ainsi, selon le procédé de l'invention, la membrane 30 reste positionnée à une distance prédéterminée de la paroi 10, à l'interface entre la partie traversante 23 et la partie proximale 21 du pion 20, la membrane 30 étant maintenue à cette distance par la partie traversante 23 déformée.

Avantageusement, la superficie de la section transversale maximale de la partie traversante 23 est strictement inférieure à la superficie minimale de la section transversale de la partie proximale 21 du pion 20.

Cette géométrie du pion 20 contribue à maintenir la membrane 30 à sa position initiale (avant l'étape (a2)).

Par exemple, le pion 20 est cylindrique et présente un épaulement à l'interface entre sa partie traversante 23 et sa partie proximale 21, le diamètre de la section transversale de la partie traversante 23 étant inférieur au diamètre de la section transversale de la partie proximale 21.

Par exemple, le pion 20 est conique et s'évase depuis sa partie traversante 23 vers sa partie proximale 21.

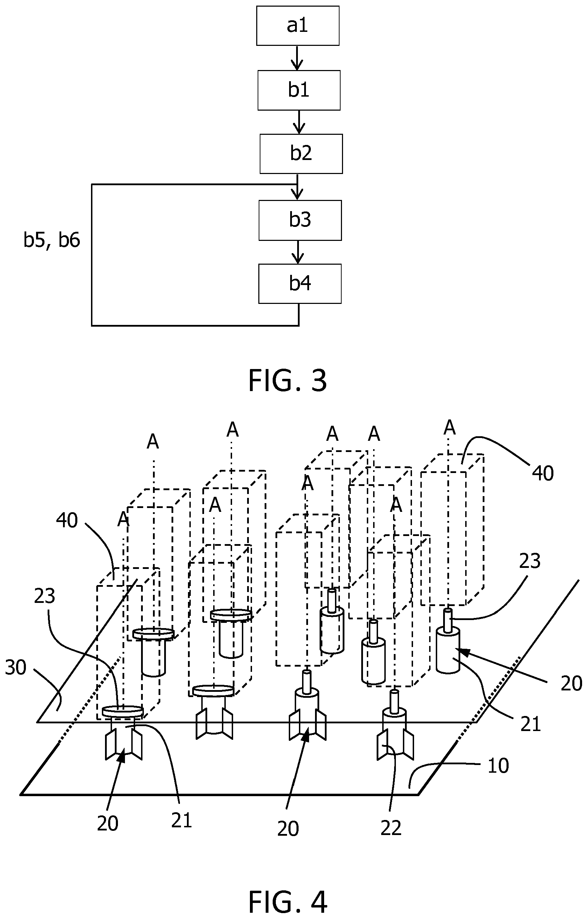

Par exemple le pion 20 présente sur sa partie proximale 21 des ailettes 22 qui s'étendent longitudinalement depuis la paroi et radialement vers l'extérieur. Ces ailettes 22 contribuent à maintenir le pion 20 aligné avec la direction longitudinale selon l'axe A. Ces ailettes sont visibles sur certains des pions sur la figure 4.

Avantageusement, après l'étape (a2) on éloigne la bouterolle 40 de façon qu'elle ne soit plus en contact avec le pion 20. Cette situation est illustrée en Figure 1C.

Ainsi, on permet à portion fondue 235 de se refroidir et de se figer plus rapidement dans sa forme prise après sa compression par la bouterolle 40.

Les essais réalisés par les inventeurs montrent que la portion fondue 235 s'enroule librement autour du pion 20 de manière à former une tête de pion.

Par enroulement d'une portion d'une pièce autour du reste de cette pièce, on entend une déformation progressive de cette portion pour former une spirale sur elle-même.

Selon l'invention, la portion fondue 235 du pion 20 s'enroule librement, ce qui signifie qu'aucune autre pièce que le pion 20 n'interfère avec cet enroulement. En particulier, l'élément 30, qu'il soit flexible ou rigide, n'interfère pas avec cet enroulement.

La figure 2 est une vue en coupe longitudinale (dans un plan contenant l'axe longitudinal A) d'un pion 20 après sa déformation par une bouterolle 40 selon le procédé de l'invention. Dans cet exemple le pion 20 a une forme conique.

Sous l'action de la bouterolle 40 la portion fondue 235 se déforme par expansion latérale, puis enroulement progressif sur elle-même de sa circonférence latérale annulaire. Cet enroulement en spirale se produit initialement en direction de la partie proximale 21, dans le sens des flèches sur la figure 2.

Par exemple, la tête de pion formée par la déformation de la portion fondue 235 a une forme de tore 24 à l'issue du processus d'enroulement et s'étend radialement vers l'extérieur depuis le reste de la partie traversante (23). Ce tore 24 étant centré sur l'axe longitudinal A et a une forme de bourrelet annulaire.

Dans certains cas, la portion centrale de la partie traversante 23 se creuse pour former une dépression centrée sur l'axe longitudinal A.

La membrane 30 est ainsi maintenue sur le pion 20 par le tore 24 puisque ce tore 24 s'étend latéralement (radialement) au-delà de l'orifice de la membrane 30 par lequel la partie traversante 23 était passée avant sa déformation par le procédé selon l'invention.

Le tore 24 est rattaché à la circonférence de l'extrémité distale du reste de la partie traversante 23 par une zone de jonction annulaire 25, visible sur la figure 2.

Les essais réalisés par les inventeurs montrent que l'épaisseur minimale E de la zone de jonction 25 doit être supérieure à une valeur seuil Es pour résister à une force d'arrachement F_{A}. L'épaisseur seuil Es dépend du matériau du pion 20. Pour une force d'arrachement F_{A} égale à 140 N et en pion 20 en polyéthylène haute densité (référencé HDPE CC252), l'épaisseur seuil Es est égale à 200 µm (microns).

Compte tenu de la diversité des propriétés mécaniques des matériaux aptes à constituer le pion, la combinaison de la pression de contact P exercée par la bouterolle 40 sur le pion 20 et de la température de chauffage T de la bouterolle 40 qui soit telle que le pion 20 se déforme par enroulement libre en un tore centré sur l'axe longitudinal A peut varier. Les valeurs de la pression de contact P et de la température de chauffage T ne peuvent donc être uniques et fixées pour toute la gamme de matériaux aptes à constituer le pion.

La partie proximale 21 du pion 20 est de longueur non-nulle, comme représenté sur les figures.

Dans certains cas, la partie proximale 21 est de longueur nulle. La membrane 30 est alors fixée contre la paroi 10 une fois le procédé de fixation selon l'invention terminé.

L'invention concerne également un procédé pour la fixation d'un élément 30 sur une pluralité de pions 20 s'étendant depuis une paroi 10.

L'invention est décrite ci-dessous dans le cas où ces pions 20 s'étendent tous sensiblement selon une direction longitudinale A. L'invention s'applique également au cas où certains des pions 20 ne s'étendent pas selon une même direction longitudinale A.

On effectue d'abord l'étape (a1) décrite ci-dessus pour chacun des pions 20, de telle sorte que la partie traversante 23 de chaque pion 20 passe au travers de l'élément 30, tandis que la partie proximale 21 de chaque pion 20 se situe entre l'élément 30 et la paroi 10.

Immédiatement après l'étape (a1), on effectue une étape (b1) d'égalisation de surface sur un premier groupe de ces pions 20.

L'étape (b1) consiste à appliquer une pression déterminée sur le premier groupe seulement des pions 20 pour compenser le fait que toutes les extrémités des parties traversantes 23 des pions 20 du premier groupe ne sont pas nécessairement coplanaires, c'est-à-dire ne se situent pas toutes dans un même plan. Cela est en général le cas soit parce que les pions 20 ne font pas la même hauteur (longueur selon l'axe longitudinal A), soit parce que la surface de la paroi 10 portant les pions 20 n'est pas plane.

Cette étape permet d'éviter que sous l'action de la bouterolle 40 certains pions 20 subissent une pression trop élevée et soient déformés de façon indésirable.

Dans cette étape (b1), on approche simultanément plusieurs bouterolles 40 destinées chacune à comprimer un des pions 20, c'est-à-dire que les bouterolles 40 sont translatées ensemble en un même mouvement selon l'axe longitudinal A jusqu'à ce qu'un premier groupe de pions 20 entre en contact sensiblement simultanément avec les bouterolles 40. Les surfaces de contact 43 des bouterolles 40 sont toutes situées dans le même plan. Avantageusement les bouterolles 40 sont toutes montées sur un même support qui est translaté. Alternativement, une bouterolle 40 unique avec une grande surface de contact 43 apte à toucher chacun des pions est translatée.

Le premier groupe des pions 20 regroupe ainsi les pions 20 dont, lorsqu'on abaisse la ou les bouterolles 40 (ou plus généralement un outil), la partie traversante 23 est en contact avec la ou les bouterolles 40 sans être comprimée selon sa direction longitudinale de façon indésirable, avantageusement sans être comprimée de façon permanente.

Le mouvement consistant à « abaisser » la ou les bouterolles 40 désigne le fait de rapprocher ces bouterolles 40 de la paroi 10 portant les pions 20.

A ce stade, les pions 20 hors de ce premier groupe ne sont pas en contact avec la bouterolle 40.

A ce stade, la bouterolle 40 n'est pas nécessairement chauffée.

Avantageusement la bouterolle 40 est chauffée avant l'étape (b1) à une température de chauffage, et reste chauffée à cette température de chauffage pendant toutes les étapes du procédé selon l'invention. Ainsi, on évite des phases de refroidissement et de chauffage entre ces étapes, et on gagne de temps dans le traitement des pions 20.

Puis, dans une étape (b2) on effectue l'étape (a2) décrite ci-dessus sur chacun des pions 20 du premier groupe.

L'élément 30 est ainsi fixé sur tous les pions 20 du premier groupe, ces pions 20 ayant été déformé durant l'étape (b2).

Si le premier groupe de pions 20 comprend tous les pions 20, l'élément 30 est fixé sur la totalité des pions 20 à l'issue de l'étape (b2), et on arrête le procédé selon l'invention.

Si au contraire l'élément 30 n'est pas fixé sur la totalité des pions 20 à l'issue de l'étape (b2), on effectue une étape (b3) d'égalisation de surface sur un deuxième groupe des pions (20) distinct du premier groupe. L'étape (b3) consiste à appliquer une pression déterminée sur le deuxième groupe des pions 20 pour compenser le fait que toutes les extrémités des parties traversantes 23 des pions 20 du premier groupe ne sont pas nécessairement coplanaires.

Puis dans une étape (b4) on effectue l'étape (a2) sur chacun des pions (20) du deuxième groupe.

L'élément 30 est ainsi fixé sur tous les pions 20 du deuxième groupe, ces pions 20 ayant été déformé durant l'étape (b4).

A l'issue de l'étape (b2), l'outil 40 peut se trouver mis au contact du deuxième groupe de pions, du seul fait que l'on a appuyé sur la portion fondue 23 des pions 20 du premier groupe de pions pendant l'étape (b2). Dans ce cas particulier, l'étape (b3) est ainsi réalisée pendant la réalisation de l'étape (b2), et on effectue directement l'étape (b4).

Si nécessaire, c'est-à-dire s'il existe des pions 20 non-inclus dans les premier et deuxième groupe, sur lesquels l'élément 30 n'est donc pas fixé, on effectue une étape (b5) dans laquelle on itère les étapes (b3) et (b4) avec un autre groupe des pions (20).

Si nécessaire, c'est-à-dire s'il existe des pions 20 non-inclus dans les premier et deuxième groupes et dans cet autre groupe, sur lesquels l'élément 30 n'est donc pas fixé, on effectue une étape (b6) dans laquelle on itère l'étape (b5) jusqu'à ce que l'élément 30 soit fixé sur tous les pions 20.

Les différentes étapes du procédé sont représentées en figure 3.

Grâce à l'approche incrémentale selon l'invention comprenant à chaque incrément une étape d'égalisation puis une étape où l'on fond une portion 235 de la partie traversante 23 des pions 20, on évite que les pions 20 qui sont en contact en premier avec la bouterolle 40 subissent trop rapidement une pression trop élevée et qu'une portion 235 de leur partie traversante 23 n'ait pas le temps de fondre et de se déformer par enroulement libre, et par conséquent que ces pions 20 soient déformés de façon indésirable.

La figure 4 illustre une paroi 10 qui présente sur sa surface interne plusieurs pions 20 qui s'étendent sensiblement selon un axe longitudinal A. Cette figure représente l'état des pions 20 entre l'étape (b2) et l'étape (b3). Ainsi, la membrane 30 est fixée sur un premier groupe des pions 20, et n'est pas fixée sur un deuxième groupe des pions 20.

Pour la clarté de la figure, les bouterolles 40 sont représentées en traits pointillés. Le premier groupe des pions 20 est situé à gauche, le deuxième groupe des pions 20 est situé à droite sur la figure 4.

L'invention concerne également un réservoir avec une paroi 10 présentant au moins un pion 20 en matière plastique dont une partie traversante 23 traverse un élément 30, une portion 235 de cette partie traversante 23 est déformée par enroulement libre autour de ce pion 20 pour former une tête de pion configurée pour maintenir l'élément 30 sur le pion 20.

## Revendications

1. Procédé pour la fixation d'un élément (30) sur une paroi (10) d'un réservoir, ladite paroi (10) présentant au moins un pion (20) en matière plastique, ce procédé comprenant les étapes suivantes :
(a1) On monte ledit élément (30) sur ledit au moins un pion (20) de telle sorte qu'une partie traversante (23) dudit pion (20) traverse ledit élément (30),
(a2) On fond une portion (235) de ladite partie traversante (23) et on appuie sur ladite portion fondue (235) de telle sorte que ladite portion fondue (235) s'enroule librement autour dudit au moins un pion (20) de manière à former une tête de pion configurée pour maintenir ledit élément (30) sur ledit pion (20).

2. Procédé selon la revendication 1 **caractérisé en ce qu'**on fond ladite portion (235) à température constante T_{c}.

3. Procédé selon la revendication 2, **caractérisé en ce qu'**on appuie sur ladite portion fondue (235) de façon progressive, avec une pression P ou une vitesse V déterminée.

4. Procédé selon la revendication 3, **caractérisé en ce que** ladite pression P ou ladite vitesse V est choisie en fonction de ladite température T_{c} de telle sorte que la partie proximale (21) dudit pion (20), qui est la partie dudit pion (20) qui n'a pas traversé ledit élément (20), est peu ou pas déformée.

5. Procédé selon l'une quelconque des revendications précédentes, **caractérisé en ce que** ladite tête de pion a une forme de tore à l'issue du processus d'enroulement et s'étend radialement vers l'extérieur depuis le reste de ladite partie traversante (23) dudit pion (20).

6. Procédé selon l'une quelconque des revendications précédentes **caractérisé en ce que** ledit au moins un pion (20) est situé sur une paroi intérieure dudit réservoir.

7. Procédé selon l'une quelconque des revendications précédentes **caractérisé en ce que** ledit élément (30) est plus flexible que ledit au moins un pion (20).

8. Procédé selon la revendication 7 **caractérisé en ce que** ledit élément (30) est une membrane.

9. Procédé selon l'une quelconque des revendications précédentes, **caractérisé en ce que** ladite paroi (10) présente une pluralité desdits pions (20), et **en ce que** immédiatement après l'étape (a1), on effectue une étape (b1) d'égalisation de surface sur un premier groupe desdits pions (20), puis dans une étape (b2) on effectue l'étape (a2) sur chacun des pions (20) dudit premier groupe, ladite étape (b1) d'égalisation de surface consistant à appliquer une pression déterminée pour compenser le fait que toutes les extrémités desdites parties traversantes (23) desdits pions (20) dudit premier groupe ne sont pas coplanaires.

10. Procédé selon la revendication précédente, **caractérisé en ce que**, à l'étape (b1), on abaisse un outil (40) sur ledit premier groupe desdits pions (20) de telle sorte que chacune desdites parties (23) des pions (20) dudit premier groupe soit en contact avec ledit outil (40) sans être comprimée selon sa direction longitudinale de façon indésirable.

11. Procédé selon la revendication 9 ou 10 **caractérisé en ce que**, après l'étape (b2), on effectue une étape (b3) d'égalisation de surface sur un deuxième groupe desdits pions (20) distinct dudit premier groupe, puis dans une étape (b4) on effectue l'étape (a2) sur chacun des pions (20) dudit deuxième groupe, ladite étape (b3) d'égalisation de surface consistant à appliquer une pression déterminée pour compenser le fait que toutes les extrémités desdites parties traversantes (23) desdits pions (20) dudit deuxième groupe ne sont pas coplanaires.

12. Procédé selon la revendication précédente **caractérisé en ce que**, à l'étape (b3), on abaisse ledit outil (40) sur ledit deuxième groupe de telle sorte que chacune desdites parties (23) des pions (20) dudit deuxième groupe soit en contact avec ledit outil (40) sans être comprimé selon sa direction longitudinale de façon indésirable.

13. Procédé selon la revendication 11 ou 12 **caractérisé en ce que**, après l'étape (b4), on effectue une étape (b5) dans laquelle on itère les étapes (b3) et (b4) avec un autre groupe desdits pions (20).

14. Procédé selon la revendication précédente **caractérisé en ce que**, après l'étape (b5), on effectue une étape (b6) dans laquelle on itère l'étape (b5) jusqu'à ce que ledit élément (30) soit fixé sur tous lesdits pions (20).

15. Réservoir avec une paroi (10) présentant au moins un pion (20) en matière plastique dont une partie traversante (23) traverse un élément (30), ledit au moins un pion (20) étant **caractérisé en ce qu'**une portion (235) de ladite partie traversante (23) est déformée par enroulement libre autour dudit au moins un pion (20) pour former une tête de pion configurée pour maintenir ledit élément (30) sur ledit pion (20).

## Patentansprüche

1. Verfahren zum Befestigen eines Elements (30) an einer Wand (10) eines Vorratsbehälters, wobei die Wand (10) mindestens einen Stift (20) aus Kunststoffmaterial aufweist, wobei das Verfahren die folgenden Schritte umfasst:
(a1) Montieren des Elements (30) auf dem mindestens einen Stift (20), sodass ein durchgehender Teil (23) des Stifts (20) durch das Element (30) dringt,
(a2) Aufschmelzen eines Abschnitts (235) des durchgehenden Teils (23) und Drücken auf den geschmolzenen Abschnitt (235), sodass der geschmolzene Abschnitt (235) sich frei um den mindestens einen Stift (20) aufrollt, um einen Stiftkopf zu bilden, der ausgelegt ist, um das Element (30) auf dem Stift (20) zu halten.

2. Verfahren nach Anspruch 1, **dadurch gekennzeichnet, dass** der Abschnitt (235) bei einer konstanten Temperatur T_{c} geschmolzen wird.

3. Verfahren nach Anspruch 2, **dadurch gekennzeichnet, dass** mit einem bestimmten Druck P oder einer bestimmten Geschwindigkeit V schrittweise auf den geschmolzenen Abschnitt (235) gedrückt wird.

4. Verfahren nach Anspruch 3, **dadurch gekennzeichnet, dass** der Druck P oder die Geschwindigkeit V in Abhängigkeit von der Temperatur T_{c} ausgewählt wird, sodass der proximale Teil (21) des Stifts (20), der der Teil des Stifts (20) ist, der nicht durch das Element (20) dringt, kaum oder gar nicht verformt wird.

5. Verfahren nach einem der vorangehenden Ansprüche, **dadurch gekennzeichnet, dass** der Stiftkopf am Ende des Aufrollvorgangs einen Torus ausbildet und sich vom Rest des durchgehenden Teils (23) des Stifts (20) radial nach außen erstreckt.

6. Verfahren nach einem der vorangehenden Ansprüche, **dadurch gekennzeichnet, dass** sich der mindestens eine Stift (20) auf einer Innenwand des Vorratsbehälters befindet.

7. Verfahren nach einem der vorangehenden Ansprüche, **dadurch gekennzeichnet, dass** das Element (30) flexibler ist als der mindestens eine Stift (20).

8. Verfahren nach Anspruch 7, **dadurch gekennzeichnet, dass** das Element (30) eine Membran ist.

9. Verfahren nach einem der vorangehenden Ansprüche, **dadurch gekennzeichnet, dass** die Wand (10) eine Vielzahl der Stifte (20) aufweist und dass unmittelbar nach dem Schritt (a1) ein Schritt (b1) ausgeführt wird, bei dem eine Oberflächenglättung auf einer ersten Gruppe der Stifte (20) erfolgt, und dann in einem Schritt (b2) der Schritt (a2) an jedem der Stifte (20) der ersten Gruppe ausgeführt wird, wobei der Schritt (b1) der Oberflächenglättung darin besteht, einen bestimmten Druck auszuüben, um auszugleichen, dass nicht alle Enden der durchgehenden Teile (23) der Stifte (20) der ersten Gruppe koplanar sind.

10. Verfahren nach dem vorangehenden Anspruch, **dadurch gekennzeichnet, dass** in dem Schritt (b1) ein Werkzeug (40) auf die erste Gruppe der Stifte (20) abgesenkt wird, sodass jeder der Teile (23) der Stifte (20) der ersten Gruppe im Kontakt mit dem Werkzeug (40) steht, ohne auf unerwünschte Weise entlang seiner Längsrichtung komprimiert zu sein.

11. Verfahren nach Anspruch 9 oder 10, **dadurch gekennzeichnet, dass** nach dem Schritt (b2) ein Schritt (b3) der Oberflächenglättung auf einer zweiten Gruppe der Stifte (20) erfolgt, die sich von der ersten Gruppe unterscheidet, und dann in einem Schritt (b4) der Schritt (a2) auf jedem der Stifte (20) der zweiten Gruppe ausgeführt wird, wobei der Schritt (b3) der Oberflächenglättung darin besteht, einen bestimmten Druck auszuüben, um auszugleichen, dass nicht alle Enden der durchgehenden Teile (23) der Stifte (20) der zweiten Gruppe koplanar sind.

12. Verfahren nach dem vorangehenden Anspruch, **dadurch gekennzeichnet, dass** in dem Schritt (b3) ein Werkzeug (40) auf die zweite Gruppe abgesenkt wird, sodass jeder der Teile (23) der Stifte (20) der zweiten Gruppe im Kontakt mit dem Werkzeug (40) steht, ohne auf unerwünschte Weise entlang seiner Längsrichtung komprimiert zu sein.

13. Verfahren nach Anspruch 11 oder 12, **dadurch gekennzeichnet, dass** nach Schritt dem (b4) ein Schritt (b5) ausgeführt wird, in dem die Schritte (b3) und (b4) mit einer anderen Gruppe der Stifte (20) wiederholt werden.

14. Verfahren nach dem vorangehenden Anspruch, **dadurch gekennzeichnet, dass** nach dem Schritt (b5) ein Schritt (b6) ausgeführt wird, in dem der Schritt (b5) wiederholt wird, bis das Element (30) an den Stiften (20) befestigt ist.

15. Vorratsbehälter mit einer Wand (10), aufweisend mindestens einen Stift (20) aus Kunststoffmaterial, von dem ein durchgehender Teil (23) durch ein Element (30) dringt, wobei mindestens ein Stift (20) **dadurch gekennzeichnet ist, dass** ein Abschnitt (235) des durchgehenden Teils (23) durch freies Aufrollen um mindestens einen Stift (20) verformt ist, um einen Stiftkopf auszubilden, der ausgelegt ist, um das Element (30) auf dem Stift (20) zu halten.

## Claims

1. Method for attaching an element (30) to a wall (10) of a tank, said wall (10) having at least one plastic pin (20), this method comprising the following steps:
(a1) said element (30) is mounted on said at least one pin (20) such that a penetrating part (23) of said pin (20) passes through said element (30),
(a2) a portion (235) of said penetrating part (23) is melted and pressure is applied to said molten portion (235) such that said molten portion (235) rolls freely around said at least one pin (20) so as to form a pin head configured to hold said element (30) on said pin (20).

2. Method according to Claim 1, **characterized in that** said portion (235) is melted at constant temperature T_{c}.

3. Method according to Claim 2, **characterized in that** pressure is applied progressively to said molten portion (235) with a determined pressure P or at a determined rate V.

4. Method according to Claim 3, **characterized in that** said pressure P or said rate V is chosen according to said temperature T_{c} so that the proximal part (21) of said pin (20), which is the part of said pin (20) that has not passed through said element (20), undergoes little or no deformation.

5. Method according to any one of the preceding claims, **characterized in that** said pin head is in the shape of a torus at the end of the rolling process and extends radially outward from the rest of said penetrating part (23) of said pin (20).

6. Method according to any one of the preceding claims, **characterized in that** said at least one pin (20) is situated on an interior wall of said tank.

7. Method according to any one of the preceding claims, **characterized in that** said element (30) is more flexible than said at least one pin (20).

8. Method according to Claim 7, **characterized in that** said element (30) is a membrane.

9. Method according to any one of the preceding claims, **characterized in that** said wall (10) has a plurality of said pins (20), and **in that** immediately after step (a1), a step (b1) of evening the surface is performed on a first group of said pins (20), and then in a step (b2), the step (a2) is performed on each of the pins (20) of said first group, said surface-evening step (b1) consisting in applying a determined pressure to compensate for the fact that not all of the ends of said penetrating parts (23) of said pins (20) of said first group are coplanar.

10. Method according to the preceding claim, **characterized in that**, in step (b1), a tool (40) is lowered onto said first group of said pins (20) such that each of said parts (23) of the pins (20) of said first group are in contact with said tool (40) without being compressed undesirably in their longitudinal direction.

11. Method according to Claim 9 or 10, **characterized in that**, after step (b2), a step (b3) of evening the surface is performed on a second group of said pins (20) distinct from said first group, and then in a step (b4) the step (a2) is performed on each of the pins (20) of said second group, said surface-evening step (b3) consisting in applying a determined pressure to compensate for the fact that not all of the ends of said penetrating parts (23) of said pins (20) of said second group are coplanar.

12. Method according to the preceding claim, **characterized in that**, in step (b3), said tool (40) is lowered onto said second group such that each of said parts (23) of the pins (20) of said second group is in contact with said tool (40) without being undesirably compressed in its longitudinal direction.

13. Method according to Claim 11 or 12, **characterized in that**, after step (b4), a step (b5) is performed in which steps (b3) and (b4) are repeated with another group of said pins (20).

14. Method according to the preceding claim, **characterized in that**, after step (b5), a step (b6) is performed in which step (b5) is repeated until said element (30) is attached to all said pins (20).

15. Tank with a wall (10) having at least one plastic pin (20) of which a penetrating part (23) passes through an element (30), said at least one pin (20) being **characterized in that** a portion (235) of said penetrating part (23) is deformed by rolling freely around said at least one pin (20) to form a pin head configured to hold said element (30) on said pin (20).
